# EUROPEAN PATENT APPLICATION

(11) **EP 2 966 559 A1**
(43) Date of publication of application: **13.01.2016**
(21) Application number: 15174838.1
(22) Date of filing: 01.07.2015
(51) Int. Cl.: G06F 3/0483

(54) **METHODS AND SYSTEMS FOR PAGE CONTROL WITH EVENT DISPLAY**

(30) Priority: 08.07.2014 TW 103123409
(71) Applicant: Hooloop Corporation, Taipei City 115 (TW)
(72) Inventor: KUAN, Tzu-Han, 115 Taipei City (TW)
(74) Representative: Karakatsanis, Georgios

(57) **Abstract**

Methods and systems for page control with event display are provided. A plurality of page indicators (PIA, PIB, PIC) are displayed via a display unit (210) of an electronic device (500), wherein each of the page indicators (PIA, PIB, PIC) corresponds to one of a plurality of pages (PA, PB, PC). When an event corresponding to a specific page exists, an effect is displayed on the page indicator (PIA, PIB, PIC) corresponding to the specific page via the display unit (210), indicating the event is present for the specific page.

## Description

### BACKGROUND

### Technical Field

The disclosure relates generally to page control methods and systems, and, more particularly to methods and systems that can display related events with a page control mechanism.

### Description of the Related Art

Recently, electronic devices, such as computers, smart phones, notebooks, or other portable devices, have become more and more technically advanced and multifunctional. For example, portable devices have network connectivity capabilities. Users can use their portable devices to connect to networks at anytime and anywhere. The convenience and new functionalities advanced by modern technology have made these devices into necessities of life.

Generally, a user can download various applications to an electronic device, and execute the applications in the electronic device. When the electronic device has a large number of applications, the applications will be displayed in several pages since the electronic device has a limited display area. Users can use their fingers to slide the user interfaces on the touch-sensitive screen to switch the pages.

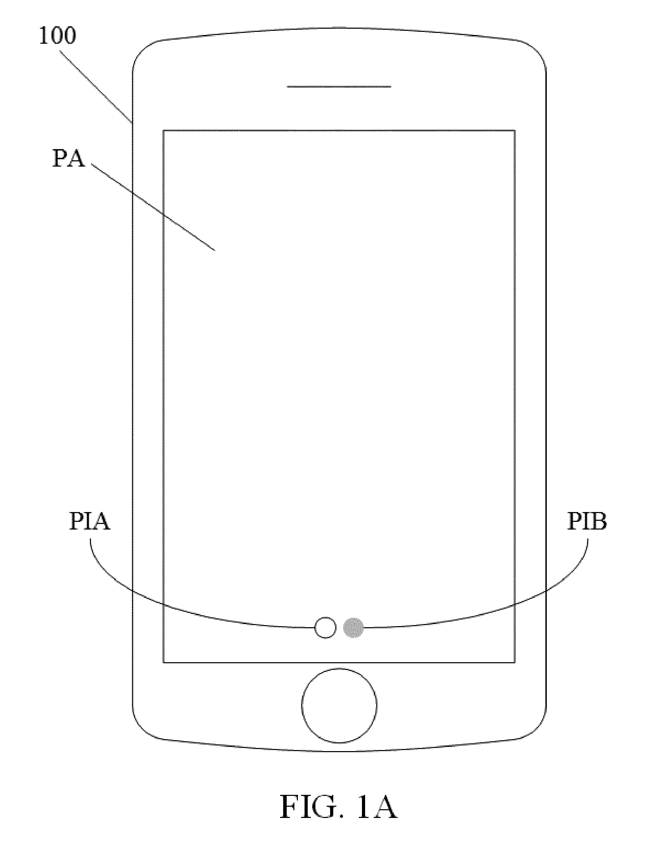

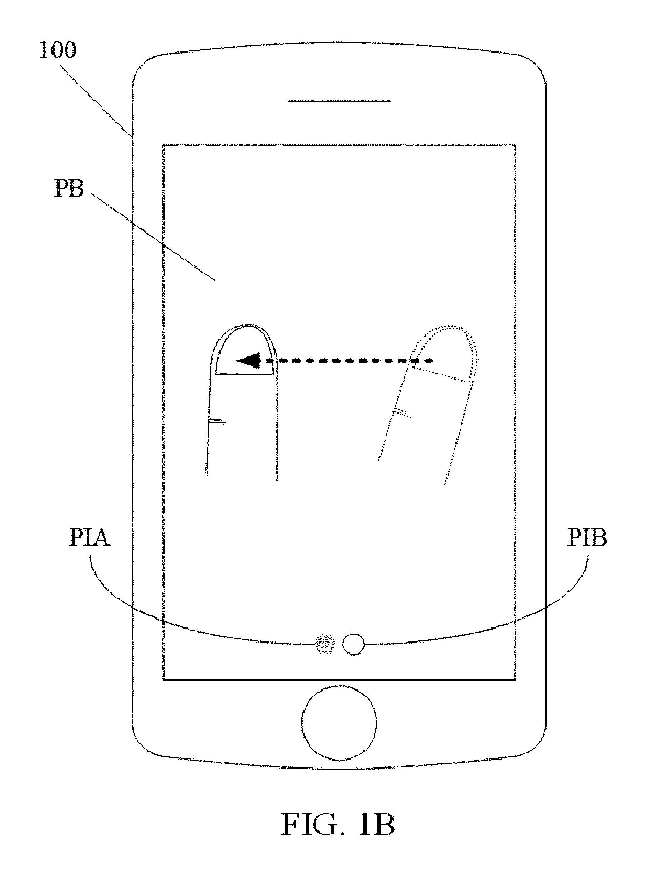

Conventionally, a page control mechanism can be implemented to manage the pages. When the electronic device 100 has two pages, the user interface can display two page indicators PIA and PIB respectively corresponding to the two pages, as shown in Fig. 1A, in which the page indicator corresponding to a page which is currently displayed in the display unit is highlighted. In the example of Fig. 1A, since the page PA is currently displayed in the displayed unit, the page indicator PIA corresponding to the page PA is highlighted. When a user uses a finger to slide the user interface on the touch-sensitive screen, the page is changed, such that the page PB is currently displayed in the displayed unit, and the page indicator PIB corresponding to the page PB is highlighted, as shown in Fig. 1B. Users can identify the relative position between the current page and other pages by using the page control mechanism. In some applications, users can accomplish the page switch process by directly selecting one of the page indicators.

In some cases, each of the applications may generate related notifications at anytime. These notifications may comprise a status change of the application itself, such as a software update, and/or a message for the user. Conventionally, users can see representative icons corresponding to respective applications via the pages. When a red mark is on a representative icon, it means that the application corresponding to the representative icon has a notification. As described, when an electronic device has a large number of applications, the applications will be displayed in several pages. Since the lack of an efficient mechanism for notification management, users must repeatedly switch between pages to know whether related notifications are present for respective applications. The above operations are inconvenient for users.

### SUMMARY

Methods and systems for page control with event display are provided, in which events corresponding to respective pages can be integrated into a page control mechanism.

In an embodiment of a method for page control with event display, a plurality of pages are provided. A plurality of page indicators are displayed via a display unit of an electronic device, wherein each of the page indicators corresponds to one of the pages. It is determined whether an event corresponding to at least one specific page exists. When an event corresponding to the specific page exists, an effect is displayed on the page indicator corresponding to the specific page via the display unit, indicating the event is present for the specific page.

An embodiment of a system for page control with event display comprises a display unit, a storage unit, and a processing unit. The storage unit comprises a plurality of pages. The processing unit displays a plurality of page indicators via the display unit, wherein each of the page indicators corresponds to one of the pages. The processing unit determines whether an event corresponding to at least one specific page exists. When an event corresponding to the specific page exists, the processing unit displays an effect on the page indicator corresponding to the specific page via the display unit, indicating the event is present for the specific page.

In some embodiments, one of the pages is displayed in the display unit, and the page indicator corresponding to the page displayed in the display unit is highlighted.

In some embodiments, the specific page comprises at least one application, and the event comprises a notification corresponding to the application.

In some embodiments, the specific page corresponds to communication messages corresponding to a specific group, and the event comprises a new message and/or a status change corresponding to the specific group.

In some embodiments, when the effect is displayed, a color of the page indicator corresponding to the specific page is changed.

In some embodiments, when the effect is displayed, the page indicator corresponding to the specific page is blinking.

In some embodiments, when the effect is displayed, a shape of the page indicator corresponding to the specific page is changed.

Methods for page control with event display may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Figs. 1A and 1B are schematic diagrams illustrating an example of a conventional page control mechanism;
Fig. 2 is a schematic diagram illustrating an embodiment of a system for page control with event display of the invention;
Fig. 3 is a flowchart of an embodiment of a method for page control with event display of the invention;
Fig. 4 is a flowchart of another embodiment of a method for page control with event display of the invention; and
Figs. 5A∼5D are schematic diagrams illustrating examples of page control with event display of the invention.

### DETAILED DESCRIPTION OF THE INVENTION

Methods and systems for page control with event display are provided.

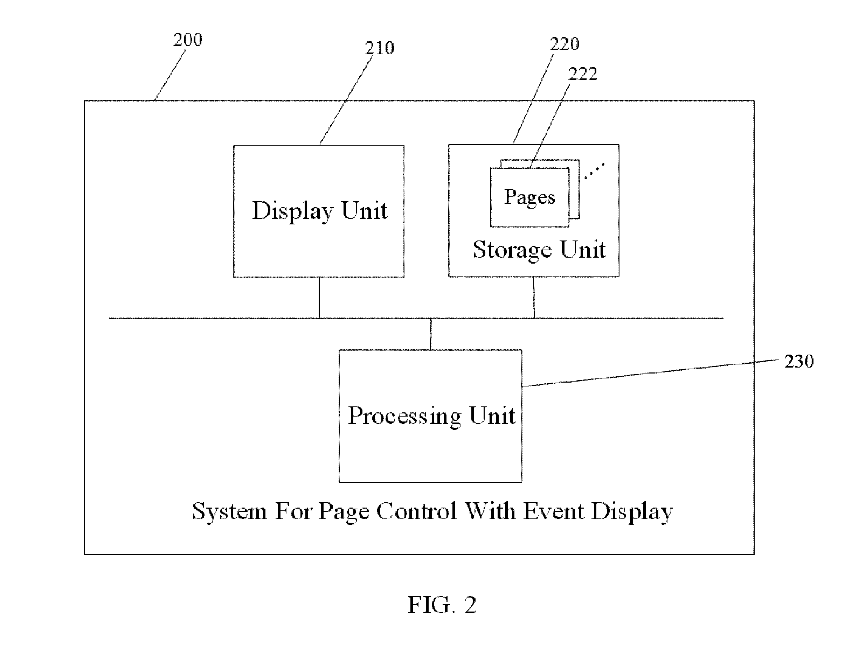

Fig. 2 is a schematic diagram illustrating an embodiment of a system for page control with event display of the invention. The system for page control with event display 200 can be used in an electronic device, such as a computer, or a portable device, such as a mobile phone, a smart phone, a PDA (Personal Digital Assistant), a GPS (Global Positioning System), a notebook, or a wearable device.

The system for page control with event display 200 can comprise a display unit 210, a storage unit 220, and a processing unit 230. The display unit 210 can display related information, such as images, interfaces, and/or data. It is understood that, in some embodiments, the display unit 210 may be a touch-sensitive screen. Users can directly input related data to the electronic device via the touch-sensitive screen. The storage unit 220 can comprise a plurality of pages 222. It is understood that, in some embodiments, each page may comprise at least one application. In some embodiments, the pages may belong to the same application, such as a network communication application, and each page corresponds to communication messages of respective specific group. It is understood that, no matter whether the page comprises an application or the page corresponds to communication messages of a specific group, the electronic device can receive corresponding events, such as a notification, a new message, and/or a status change via the application. It is noted that, the above pages are examples of the application, and any data which needs to be differentiated in multiple pages for presentation can be applied in the present invention. Also, the above events are examples of the application, and the present invention is not limited thereto. Any data or status change corresponding to a page can be regarded as an event corresponding to the page. The display unit 210 can display one of the pages 222. The processing unit 230 can control related operations of hardware and software in the electronic device, and perform the methods for page control with event display of the present invention, which will be discussed later.

It is understood that, in some embodiments, the system for page control with event display 200 can comprise a network connecting unit (not shown in Fig. 2), for connecting to a network, such as a wired network, a telecommunication network, or a wireless network such as Bluetooth or Wi-Fi network. The electronic device can have network connectivity capabilities by using the network connecting unit. As described, the electronic device can receive related events via the application and the network.

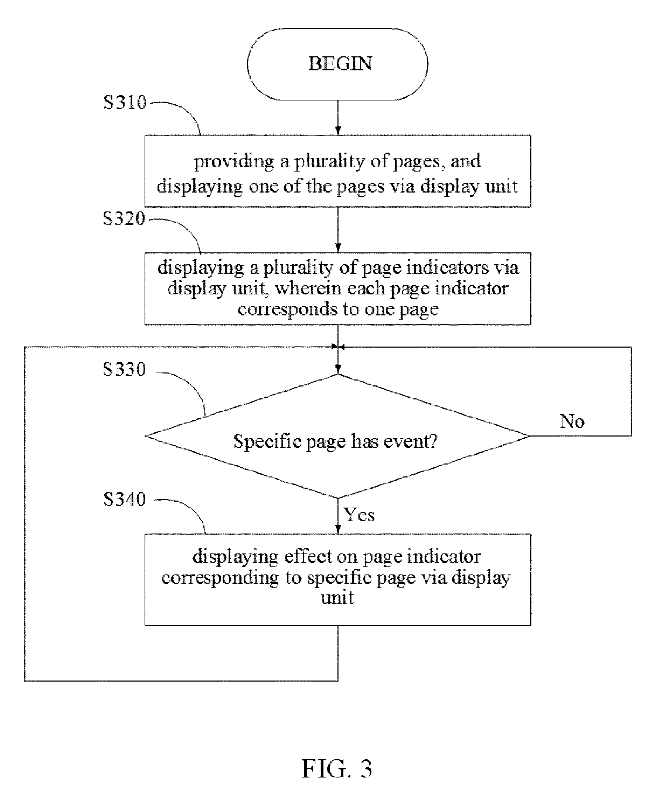

Fig. 3 is a flowchart of an embodiment of a method for page control with event display of the invention. The method for page control with event display can be used in an electronic device, such as a computer, or a portable device, such as a mobile phone, a smartphone, a PDA, a GPS, a notebook, or a wearable device.

In step S310, a plurality of pages are provided, and one of the pages is displayed via a display unit. It is understood that, in some embodiments, each page can comprise at least one application. In some embodiments, the respective page may correspond to communication messages of respective specific group. It is noted that, the above pages are examples of the application, and any data which needed to be differentiated in multiple pages for presentation can be applied in the present invention. In step S320, a plurality of page indicators are displayed via the display unit, wherein each of the page indicators corresponds to one of the pages. In step S330, it is determined whether an event corresponding to at least one specific page exists. It is understood that, in some embodiments, the event may be a notification corresponding to an application. In some embodiments, the event may be a new message and/or a status change corresponding to a specific group in a network communication application. For example, when a specific user adds or exits a specific group, the status change is present. It is noted that, the above events are examples of the application, and the present invention is not limited thereto. Any data or status change corresponding to a page can be regarded as an event corresponding to the page. When no event exists (No in step S330), the procedure remains at step S330. When an event corresponding to the specific page exists (Yes in step S330), in step S340, an effect is displayed on the page indicator corresponding to the specific page via the display unit, indicating the event is present for the specific page. It is understood that, in some embodiments, when the effect is displayed, a color of the page indicator corresponding to the specific page is changed. In some embodiments, when the effect is displayed, a shape of the page indicator corresponding to the specific page is changed. In some embodiments, when the effect is displayed, the page indicator corresponding to the specific page is blinking. It is noted that, the above effects are examples of the application, and the present invention is not limited thereto. Any effect which can change the display manner of the page indicator corresponding to the page having an event, and differentiate the page indicator from others can be applied in the present invention.

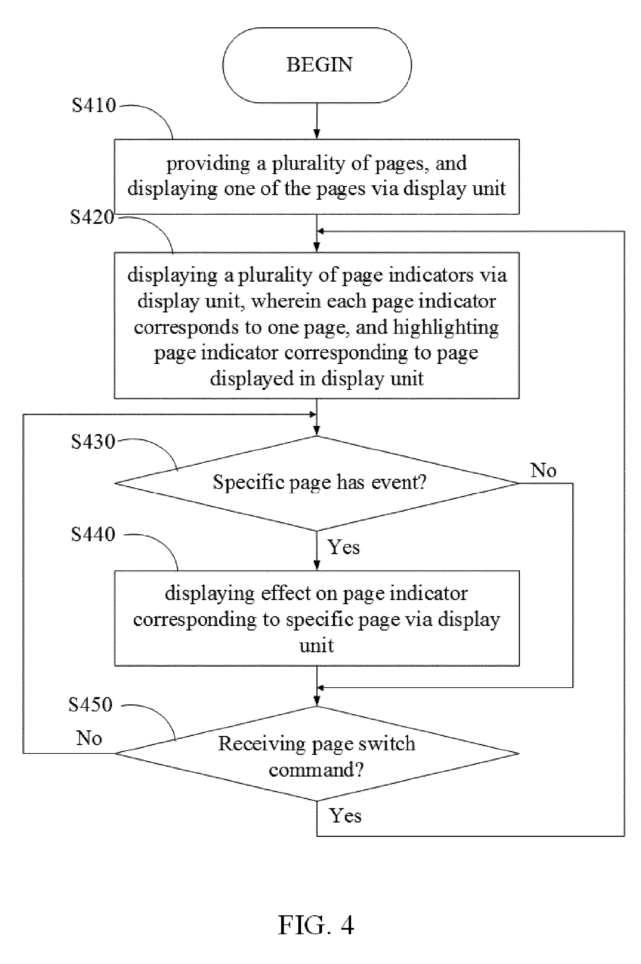

Fig. 4 is a flowchart of another embodiment of a method for page control with event display of the invention. The method for page control with event display can be used in an electronic device, such as a computer, or a portable device, such as a mobile phone, a smartphone, a PDA, a GPS, a notebook, or a wearable device.

In step S410, a plurality of pages are provided, and one of the pages is displayed via a display unit. Similarly, in some embodiments, each page can comprise at least one application. In some embodiments, the respective page may correspond to communication messages of respective specific group. It is noted that, the above pages are examples of the application, and any data which needs to be differentiated in multiple pages for presentation can be applied in the present invention. In step S420, a plurality of page indicators are displayed via the display unit, wherein each of the page indicators corresponds to one of the pages, and the page indicator corresponding to the page which are currently displayed in the display unit is highlighted. In step S430, it is determined whether an event corresponding to at least one specific page exists. Similarly, in some embodiments, the event may be a notification corresponding to an application. In some embodiments, the event may be a new message and/or a status change corresponding to a specific group in a network communication application. For example, when a specific user adds or exits the specific group, the status change is present. It is noted that, the above events are examples of the application, and the present invention is not limited thereto. Any data or status change corresponding to a page can be regarded as an event corresponding to the page. When no event exists (No in step S430), the procedure goes to step S450. When an event corresponding to the specific page exists (Yes in step S430), in step S440, an effect is displayed on the page indicator corresponding to the specific page via the display unit, indicating the event is present for the specific page. Similarly, in some embodiments, when the effect is displayed, a color of the page indicator corresponding to the specific page is changed. In some embodiments, when the effect is displayed, a shape of the page indicator corresponding to the specific page is changed. In some embodiments, when the effect is displayed, the page indicator corresponding to the specific page is blinking. It is noted that, the above effects are examples of the application, and the present invention is not limited thereto. Any effect which can change the display manner of the page indicator corresponding to the page having an event, and which differentiates the page indicator from others can be applied in the present invention. Then, in step S450, it is determined whether a command for page switch is received. It is understood that, in some embodiments, users can use a finger to slide on the touch-sensitive screen to switch between the pages. When the command for page switch is not received (No in step S450), the procedure returns to step S430. When the command for page switch is received (Yes in step S450), the procedure goes to step S420. After the page is changed, the page indicator corresponding to the page which is currently displayed in the display unit is highlighted.

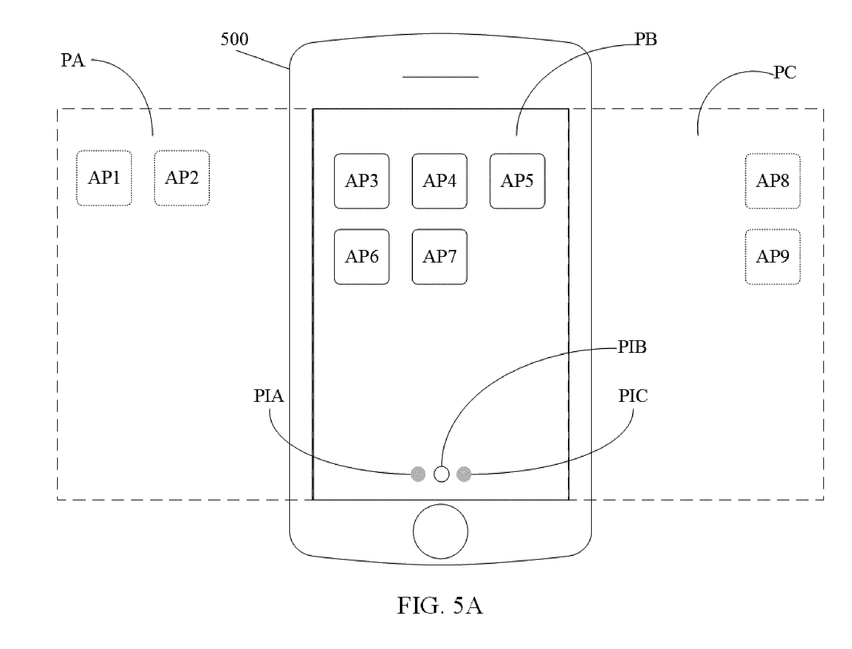

Figs. 5A∼5D are schematic diagrams illustrating examples of page control with event display of the invention.

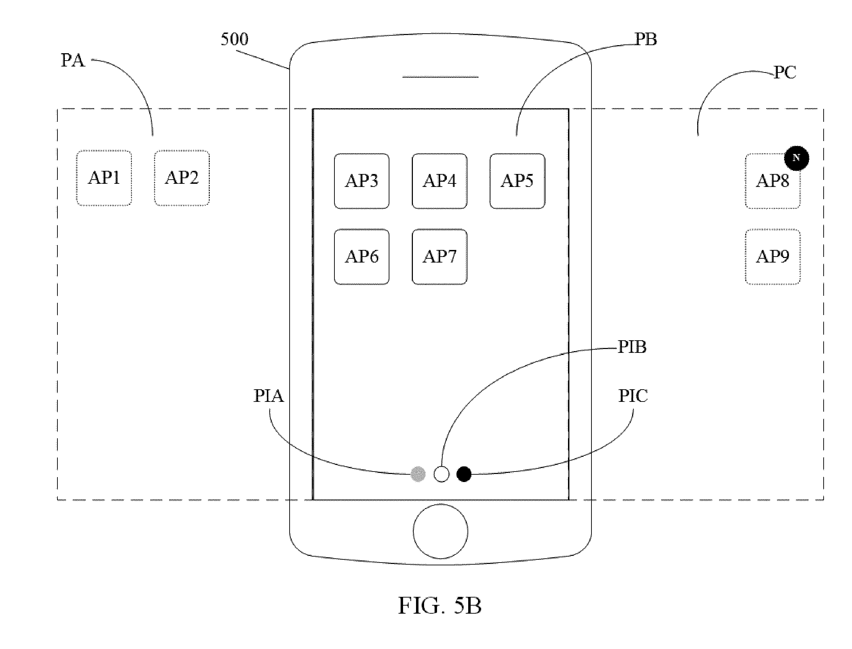

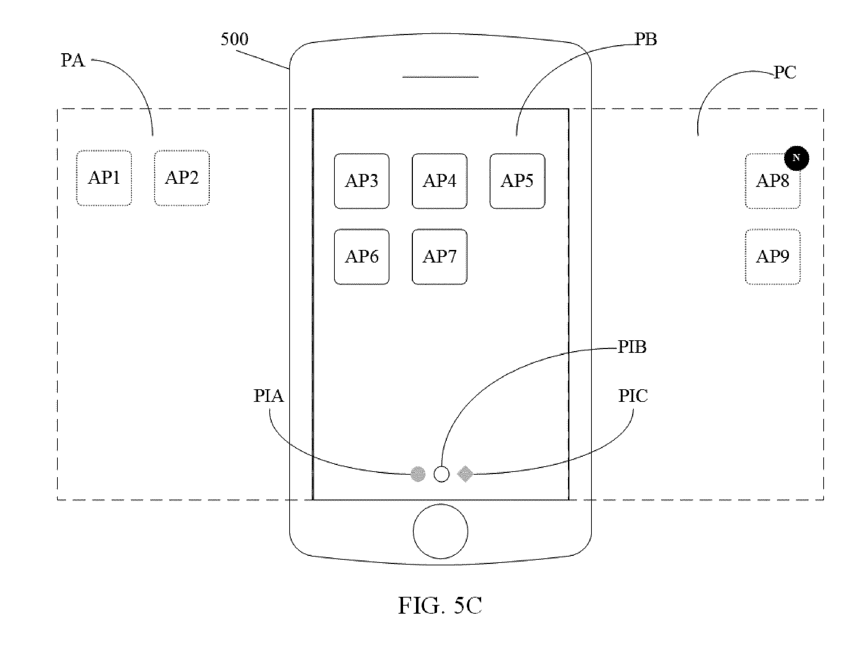

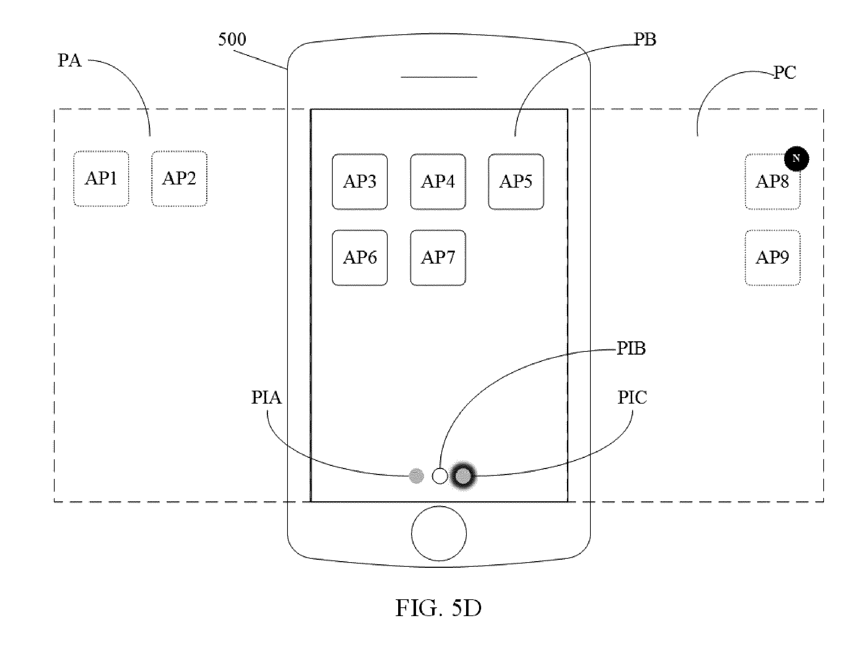

An electronic device 500 has three pages (PA, PB and PC), and the display unit of the electronic device 500 displays one of the pages, such as the page PB shown in Fig. 5A. It is noted that, in the example, the page PA includes applications AP1 and AP2, the page PB includes applications AP3-AP7, and the page PC includes applications AP8 and AP9. The display unit further displays three page indicators PIA, PIB and PIC respectively corresponding to the three pages, in which the page indicator corresponding to the page which is currently displayed in the display unit is highlighted. In the example of Fig. 5A, since the page PB is currently displayed in the display unit, the page indicator PIB corresponding to the page PB is highlighted. Similarly, users can use a finger to slide on the touch-sensitive screen to switch between the pages. It is noted that, when the page displayed in the display unit is changed, the highlighted page indicator is also changed accordingly. When the application AP8 in the page PC has an event, such as an update notification, the page indicator PIC corresponding to the page PC is applied with an effect. For example, the color of the page indicator PIC corresponding to the page PC can be changed, as shown in Fig. 5B. In another example, the shape of the page indicator PIC corresponding to the page PC can be changed, as shown in Fig. 5C. In another example, the page indicator PIC corresponding to the page PC can be blinking, as shown in Fig. 5D. It is noted that, since the page PB is still displayed in the display unit, the page indicator PIB corresponding to the page PB is still highlighted.

Therefore, the methods and systems for page control with event display of the present invention can integrate events into the page control mechanism, such that users can directly know whether events corresponding to respective pages exist via the page indicators in the page control mechanism, thereby reducing the repeated operations between pages, and increasing the efficiency of interface operation.

Methods for page control with event display may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A method for page control with event display for use in an electronic device (500), comprising:
providing a plurality of pages (PA, PB, PC);
displaying a plurality of page indicators (PIA, PIB, PIC) via a display unit (210) of the electronic device (500), wherein each of the page indicators (PIA, PIB, PIC)corresponds to one of the pages (PA, PB, PC);
determining whether an event corresponding to at least one specific page exists; and
when an event corresponding to the specific page exists, displaying an effect on the page indicator (PIA, PIB, PIC) corresponding to the specific page via the display unit(220), indicating the event is present for the specific page.

2. The method of claim 1, further comprising:
displaying one of the pages (PA, PB, PC) in the display unit (210); and
highlighting the page indicator (PIA, PIB, PIC) corresponding to the page (PA, PB, PC) displayed in the display unit(210).

3. The method of claim 1 or 2, wherein the specific page comprises at least one application (AP1, AP2, ..., AP9), and the event comprises a notification corresponding to the application (AP1, AP2, ... ,AP9).

4. The method of claim 1 or 2, wherein the specific page corresponds to communication messages corresponding to a specific group, and the event comprises a new message or a status change corresponding to the specific group.

5. The method of claim 1, 2, 3 or 4, wherein when the effect is displayed, a color of the page indicator (PIA, PIB, PIC) corresponding to the specific page is changed.

6. The method of claim 1, 2, 3, 4 or 5, wherein when the effect is displayed, the page indicator (PIA, PIB, PIC) corresponding to the specific page is blinking.

7. The method of claim 1, 2, 3, 4 or 5, wherein when the effect is displayed, a shape of the page indicator (PIA, PIB, PIC) corresponding to the specific page is changed.

8. A system (200) for page control with event display for use in an electronic device (500), comprising:
a display unit (210);
a storage unit (220) comprising a plurality of pages (222); and
a processing unit (230) displaying a plurality of page indicators via the display unit, wherein each of the page indicators corresponds to one of the pages (222), determining whether an event corresponding to at least one specific page exists, and when an event corresponding to the specific page exists, displaying an effect on the page indicator corresponding to the specific page via the display unit (210), indicating the event is present for the specific page.

9. A machine-readable storage medium comprising a computer program, which, when executed, causes a device to perform a method for page control with event display, wherein the method comprises:
providing a plurality of pages (PA, PB, PC);
displaying a plurality of page indicators (PIA, PIB, PIC) via a display unit (210) of the electronic device (500), wherein each of the page indicators (PIA, PIB, PIC) corresponds to one of the pages (PA, PB, PC);
determining whether an event corresponding to at least one specific page exists; and
when an event corresponding to the specific page exists, displaying an effect on the page indicator (PIA, PIB, PIC) corresponding to the specific page via the display unit (210), indicating the event is present for the specific page.
